# EUROPÄISCHE PATENTSCHRIFT

(11) **EP 3 880 428 B1**
(45) Veröffentlichungstag und Bekanntmachung des Hinweises auf die Patenterteilung: **27.04.2022**
(21) Anmeldenummer: 19801523.2
(22) Anmeldetag: 07.11.2019
(51) Int. Cl.: B29C 48/53, B29C 48/395, B29C 48/505

(54) **EXTRUDERSCHNECKE, EXTRUSIONSVORRICHTUNG MIT EXTRUDERSCHNECKE SOWIE VERFAHREN ZUM PLASTIFIZIEREN EINES KUNSTSTOFFES**
EXTRUDER SCREW, EXTRUSION DEVICE HAVING AN EXTRUDER SCREW AND METHOD FOR PLASTICIZING A PLASTIC
VIS D'EXTRUSION, DISPOSITIF D'EXTRUSION DOTÉ D'UNE VIS D'EXTRUSION ET PROCÉDÉ DE PLASTIFICATION D'UNE MATIÈRE PLASTIQUE

(30) Priorität: 27.11.2018 DE 102018009308
(43) Veröffentlichungstag der Anmeldung: 22.09.2021
(73) Patentinhaber: KraussMaffei Extrusion GmbH, 30625 Hannover (DE)
(72) Erfinder: SKRABALA, Otto, 78250 Tengen (DE); ROIDER, Stephan, 82008 Unterhaching (DE)
(74) Vertreter: Krauss, Philipp
(86) Internationale Anmeldenummer: PCT/EP2019/080469
(87) Internationale Veröffentlichungsnummer: WO 2020/108939

(56) Entgegenhaltungen:
- DE-A1-102012 008 023
- US-A- 4 015 832
- US-A- 5 219 590
- US-A1- 2004 141 406
- US-B1- 6 227 692

## Beschreibung

Die Erfindung betrifft eine Extruderschnecke zum Plastifizieren von zumindest einem Kunststoff oder einem Kunststoffgemisch, mit einer Aufschmelzzone, einer Wellenzone (auch als Wave-Zone bezeichnet und somit eine Zone betreffend, die zumindest einen seine Tiefe in Längsrichtung wellenförmig ändernden Fördergang aufweist) sowie einer zwischen der Aufschmelzzone und der Wellenzone angeordneten Mischzone, wobei in der Aufschmelzzone sowie in der Wellenzone ein sich helixartig / unter Ausbildung einer Helix entlang einer Schneckenlängsachse erstreckender Fördersteg ausgebildet ist. Des Weiteren betrifft die Erfindung eine Extrusionsvorrichtung mit dieser Extruderschnecke sowie ein Verfahren zum Plastifizieren von zumindest einem Kunststoff oder einem Kunststoffgemisch mittels der Extrusionsvorrichtung.

Aus dem Stand der Technik sind bereits zahlreiche gattungsgemäße Schneckenausbildungen bekannt.

Mit der US 4 173 417 A ist eine Wave-Schnecke beschrieben, bei der eine Kompressionszone (beim konventionellen Aufschmelzen) direkt an eine Wave-Zone anschließt. Auch aus der US 4 405 239 A und der US 6 599 004 B2 sind ähnliche Schnecken bekannt, bei denen sich direkt an eine Kompressionszone eine Wave-Zone anschließt. Diese Schnecken haben den Nachteil, dass der zum Feststoffbett kompaktierte Restfeststoff des Kunststoffes oder Kunststoffgemisches als relativ großer Brocken in die Wave-Zone eintritt. Dadurch kann es vorkommen, dass die Wave-Zone lediglich mit einer relativ geringen Effizienz plastifiziert.

Es gab daher bereits Überlegungen, entsprechende Schnecken umzugestalten, um die Effizienz der Wave-Zone zu erhöhen. In diesem Zusammenhang offenbart die US 6 056 430 A eine Schnecke, bei der zunächst konventionell mit einer Barriereschnecke aufgeschmolzen wird, wobei in einer Metering-Zone der Schnecke eine Wave-Zone platziert ist. Die Stege des Barriereabschnitts gehen dort in die Wave-Zone über. Zwischen der Barrierezone und der Wave-Zone ist eine Übergangszone platziert, bei der die Funktion der beiden Stege umgekehrt wird. Der Barrieresteg wird somit zum Hauptsteg und der Hauptsteg zum Barrieresteg. Dadurch wird erreicht, dass das Feststoffbett, das sich zunächst an der passiven Flanke befindet auf die aktive Flanke der Schnecke verschoben wird. Durch die Verschiebung soll eine höhere Scherung auf das Feststoffbett aufgebaut werden. Eine Durchmischung zwischen dem Feststoff und einer Schmelze des entsprechenden Kunststoffes soll dabei jedoch nicht stattfinden.

Zudem ist aus der US 6 672 753 B1 bekannt, eine Barrierezone mit einer Wave-Zone einer Schnecke zu kombinieren, wobei zwischen diesen eine so genannte Umorientierungs-Zone platziert ist. Auch sind Umorientierungs-Zonen aus der US 7 014 353 B2 und der US 7 156 550 B2 bekannt, wobei stets eine Barrierezone vor der Umorientierungs-Zone platziert ist. Ein Nachteil der mit den jeweiligen Umorientierungs-Zonen versehenen Schnecken kann jedoch ebenfalls darin gesehen werden, dass in manchen Fällen noch keine ausreichend hohe Durchmischung des Restfeststoffes mit der Schmelze vor dem Eintritt in die Wave-Zone vorliegt.

Ebenso ist noch Stand der Technik aus der EP 1 993 807 B1 bekannt, womit offenbart ist, eine mehrgängige Schnecke mit einer Wave-Zone zu kombinieren, wobei die Wave-Zone hinter dem jeweiligen mehrgängigen Aufschmelzbereich angeordnet ist. Als Nachteil ist hierbei jedoch die höhere Gangsteigung in der Mischzone gegenüber den an die Mischzone anschließenden Zonen zu nennen. Dadurch ist ein relativ hoher Platzbedarf bzw. bei gleichem Bauraum eine Effizienzminderung die Folge.

Ferner ist aus der US 6 227 692 B1 eine Extruderschnecke bekannt, wobei am Ende der Aufschmelzzone eine Wellen- bzw. Wave-Zone platziert ist. Anschließend an diese Wellenzone folgt eine Mischzone und wiederum an diese anschließend eine zweite Wellenzone. Durch die Mischzone wird eine Durchmischung von Schmelze und Restfeststoff erreicht. Als Nachteil ist hierbei jedoch zu nennen, dass die Mischzone erst nach der ersten Wellenzone platziert ist. Somit tritt der Restfeststoff ungemischt in die erste Wellenzone ein, wobei der Restfeststoff noch unzerkleinert ist, wodurch die erste Wellenzone ineffizient plastifiziert.

Weiterer Stand der Technik ist aus der US 2004 / 0141 406 A1 bekannt.

Es ist daher die Aufgabe der vorliegenden Erfindung, die aus dem Stand der Technik bekannten Nachteile zu beheben und insbesondere eine Extruderschnecke zur Verfügung zu stellen, die eine effizientere Plastifizierung des jeweiligen Kunststoffes oder Kunststoffgemisches ermöglicht.

Dies wird nach dem erfindungsgemäßen Gedanken dadurch gelöst, dass ein (erster) Fördersteg der Aufschmelzzone an einem der in direktem Anschluss an die Aufschmelzzone angeordneten Mischzone zugewandten Ende der Aufschmelzzone endet und ein (zweiter) Fördersteg der Wellenzone an einem der Mischzone zugewandten Ende beginnt. Somit ist der Fördersteg der Extruderschnecke im Bereich der Mischzone ausgelassen / unterbrochen. Der (erste) Fördersteg der Aufschmelzzone endet dann unmittelbar zu Beginn der Mischzone. Die Mischzone weist folglich keinen Fördersteg auf. Unter einem Fördersteg ist insbesondere jener helixartig verlaufende Steg der Extruderschnecke bezeichnet, der zum Befördern des Kunststoffes in axialer Richtung entlang der Schneckenlängsachse dient. Folglich weist die Mischzone insbesondere keinen helixartig verlaufenden Fördersteg auf, der einen oder mehrere sich vollständig / um 360° herum erstreckende(-n) Gewindegang(/-gänge) aufweist / ausbildet.

Durch das Weglassen des Fördersteges in der Mischzone kommt es zu einer signifikant besseren Vermischung des Feststoffanteils / Restfeststoffes mit der Schmelze vor Eintritt in die Wellenzone. Dadurch kann in der anschließenden Wellenzone deutlich effektiver plastifiziert werden.

Zudem wird eine weitere Steigerung der Mischwirkung dadurch erreicht, dass die Aufschmelzzone als Dekompressionsschnecke ausgebildet ist. Die Gangtiefe des oder der Fördergangs(/-gänge) der Aufschmelzzone nimmt dabei abschnittsweise kontinuierlich in axialer Richtung entlang der Schneckenlängsachse zu. Die Gangtiefe der Aufschmelzzone nimmt vollständig (d.h. vollständig über die gesamte axiale Länge der Aufschmelzzone) kontinuierlich in axialer Richtung entlang der Schneckenlängsachse zu. Durch die Zunahme der Gangtiefe wird der Restfeststoff am Ende der Aufschmelzzone unterspült und somit bereits der Restfeststoff aufgebrochen. Durch dieses Aufbrechen des Restfeststoffes kann bereits in der Aufschmelzzone eine Vermischung des Feststoffanteils / Restfeststoffes mit der Schmelze stattfinden. Durch die weiter gesteigerte Durchmischung kann die an die Mischzone anschließende Wellenzone noch deutlich effektiver plastifizieren.

Weitere vorteilhafte Ausführungsformen hinsichtlich des erfindungsgemäßen Gedanken sind mit den Unteransprüchen beansprucht sowie nachfolgend näher erläutert.

Demnach ist es weiterhin vorteilhaft, wenn die Wellenzone im direkten Anschluss an die Mischzone angeordnet sind/ist. Der (zweite) Fördersteg der Wellenzone endet oder beginnt dann unmittelbar am Ende der Mischzone.

Alternativ zu dem unmittelbaren / direkten Übergang der Aufschmelzzone in die Mischzone, ist es jedoch auch vorteilhaft, wenn zwischen der Aufschmelzzone und der Mischzone eine weitere Zone, vorzugsweise eine (z.B. mehrgängige, bevorzugt zweigängige) Metering-Zone, die sich wiederum von der Aufschmelzzone sowie der Mischzone unterscheidet, vorhanden ist. Dadurch wird die Effizienz zum Plastifizieren weiter erhöht.

Des Weiteren ist es in diesem Zusammenhang von Vorteil, wenn die Aufschmelzzone mehrgängig, vorzugsweise mindestens zweigängig, weiter bevorzugt dreigängig ist. Dabei endet(/-en) weiter bevorzugt jeglicher Steg / alle Stege der Aufschmelzzone an dem der Mischzone zugewandten Ende der Aufschmelzzone.

Auch zweckmäßig ist es, wenn die Wellenzone mehrgängig, vorzugsweise zweigängig, ist. Dabei beginnt(/-en) wiederum bevorzugt jeglicher Steg / alle Stege der Wellenzone erst an dem der Mischzone zugewandten Ende der Wellenzone.

Um die Zerkleinerung des in die Mischzone eintretenden Restfeststoffes weiter zu verbessern, ist es auch von Vorteil, wenn die Mischzone zumindest einen eine distributive und/oder disperse Vermischung eines Feststoffanteils mit einem plastifizierten Anteil / Schmelzanteil des zumindest einen Kunststoffes oder Kunststoffgemisches fördernden (distributiven und/oder dispersen) Mischabschnitt aufweist.

In diesem Zusammenhang ist es besonders vorteilhaft, wenn der zumindest eine Mischabschnitt stoffeinteilig / integral mit einem die Mischzone ausbildenden Schneckenabschnitt oder separat / einzeln zu dem die Mischzone ausbildenden Schneckenabschnitt (unter Ausbildung eines separaten Mischelements oder separater Mischelemente) ausgebildet ist. Dadurch sind zahlreiche Möglichkeiten gegeben, um die entsprechende Mischzone individuell an den zu plastifizierenden Kunststoff anzupassen.

Diesbezüglich ist es weiterhin vorteilhaft, wenn der zumindest eine Mischabschnitt als eine Zahnscheibe, eine Lochscheibe, ein Mischstift oder ein Rautenelement ausgebildet ist oder eine oder mehrere längliche / leistenförmige Erhebung(-en) aufweist. Dadurch wird insbesondere die distributive Vermischung in der Mischzone erhöht.

Um die disperse Vermischung zu fördern ist es zudem vorteilhaft, wenn der zumindest eine Mischabschnitt als eine Scherspalte, ein Blisterring oder ein Keilspaltelement / Keilspaltbereich ausgebildet ist.

Die Durchmischung wird weiter verbessert, wenn die Mischzone mehrerer dieser die distributive und/oder disperse Vermischung des Feststoffanteils mit dem plastifizierten Anteil des Kunststoffes fördernden Mischabschnitte aufweist.

Des Weiteren betrifft die Erfindung eine Extrusionsvorrichtung / einen Extruder mit einer erfindungsgemäßen Extruderschnecke gemäß einer der zuvor beschriebenen Ausführungen, d.h. mit einer Extruderschnecke nach dem erfindungsgemäßen Gedanken.

Des Weiteren betrifft die Erfindung ein Verfahren zum Plastifizieren zumindest eines Kunststoffes oder eines Kunststoffgemisches mittels der Extrusionsvorrichtung / dem Extruder.

In anderen Worten ausgedrückt, werden durch die erfindungsgemäße Ausführung eine bessere Ver- und Zerteilung des Feststoffanteils und eine intensivere Durchmischung mit der Schmelze erreicht, was wiederum den Aufschmelzprozess in der Wave-Zone begünstigt. Dadurch wird in der Wave-Zone bei gleichbleibenden geometrischen Abmessungen mehr Restfeststoff aufgeschmolzen. Die Durchsätze können weiter gesteigert werden, ohne die Baugröße der Maschine vergrößern zu müssen. Eine Durchsatzsteigerung wirkt sich ferner positiv auf die Betriebskosten und auf die Investitionskosten aus, da mit kleineren Maschinen bereits die gewünschte Ausstoßleistung erreicht wird. Zudem ist erwartet, dass die Kombination aus konventionellem Aufschmelzen und dispersem Aufschmelzen (in der Wave-Zone) eine Durchsatzsteigerung ermöglicht, ohne die Austrittstemperatur der Schmelze gravierend zu steigern. Dies wirkt sich wiederum positiv auf die Betriebskosten und auf die Fertigungskosten der jeweiligen extrudierten Produkte aus.

Die Erfindung wird nun nachfolgend anhand von Figuren näher erläutert, in welchem Zusammenhang verschiedene Ausführungsbeispiele zum Veranschaulichen der erfindungsgemäßen Gedanken dargestellt sind.

Es zeigen:
Fig. 1 eine schematische Ansicht eines Abschnittes einer erfindungsgemäßen Extruderschnecke nach einem ersten Ausführungsbeispiel, wobei die Extruderschnecke abgewickelt sowie in liegender Position veranschaulicht ist, wobei die Aufschmelzzone als eine Dekompressionszone ausgebildet ist,
Fig. 2 eine detaillierte perspektivische Darstellung einer in der Fig. 1 eingesetzten Mischzone mit Mischabschnitten,
Fign. 3a bis 3h weitere Ausführungsbeispiele hinsichtlich der in der Fig. 1 einsetzbaren Mischabschnitte.

Die Figuren sind lediglich schematischer Natur und dienen ausschließlich dem Verständnis der Erfindung. Die gleichen Elemente sind mit denselben Bezugszeichen versehen. Auch sei darauf hingewiesen, dass die unterschiedlichen Merkmale der verschiedenen Figuren sowie Ausführungsbeispiele prinzipiell untereinander kombiniert werden können.

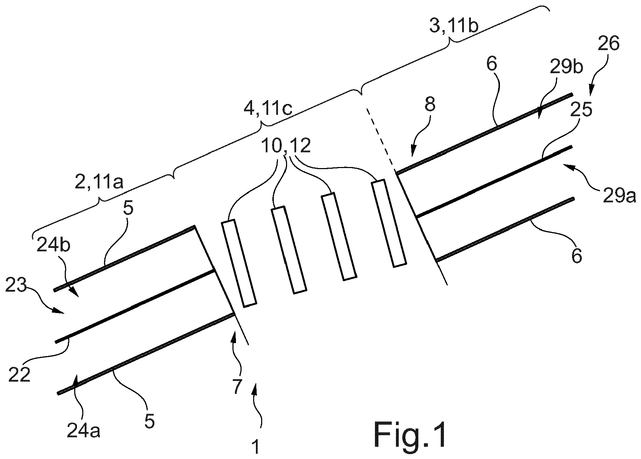

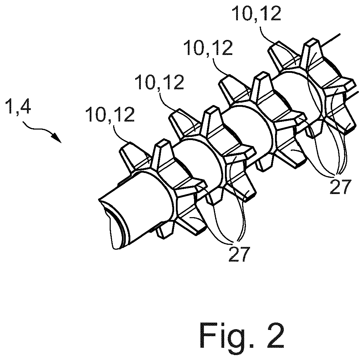

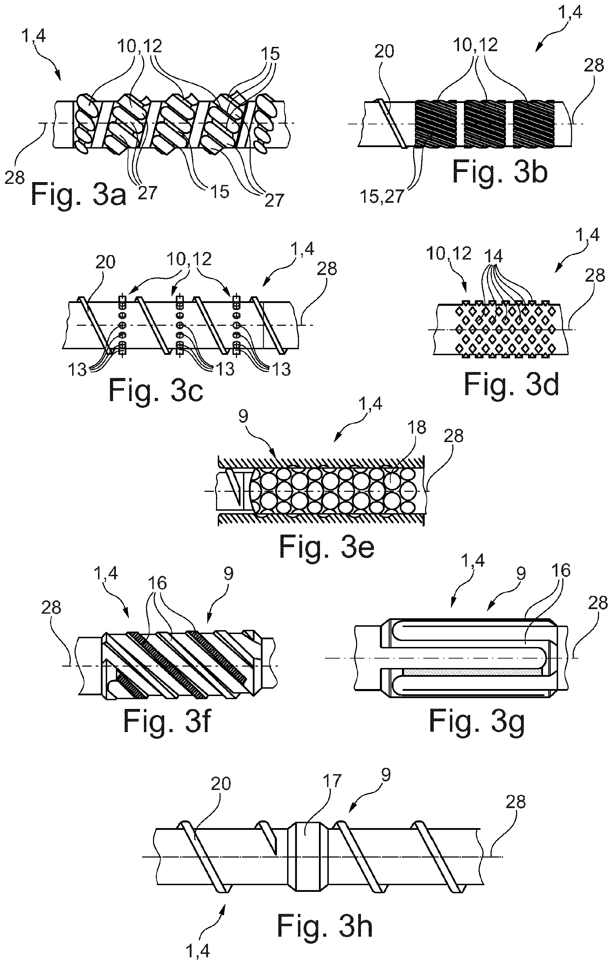

In Verbindung mit der Fig. 1 ist ein Ausführungsbeispiel abgebildet, das den erfindungsgemäßen Gedanken veranschaulicht. Die Ausführungen der Mischabschnitte 9, 10, wie sie in den Fign. 2 und 3a bis 3h veranschaulicht sind, sind prinzipiell auf das Ausführungsbeispielder Fig. 1 anwendbar. Das Ausführungsbeispiel der Fig. 1 veranschaulicht die erfindungsgemäße Extruderschnecke 1 in einer schematischen, abgewinkelten Darstellung. Die Extruderschnecke 1 dient auf übliche Weise zum Plastifizieren von zumindest einem Kunststoff / einer Kunststoffkomponente oder von einem Kunststoffgemisch in Form mehrerer Kunststoffkomponenten. Die Extruderschnecke 1 ist auf übliche Weise in ihrem Betrieb in einer Extrusionsvorrichtung / einem Extruder eingesetzt, welche Extrusionsvorrichtung hier der Übersichtlichkeit halber nicht weiter dargestellt ist. Die Extrusionsvorrichtung weist auf typische Weise ein Gehäuse / Extrusionsgehäuse mit einem Einlass und einem Auslass auf. Die Extruderschnecke 1 erstreckt sich mit ihren nachfolgend näher beschriebenen Zonen 2, 3 und 4 zwischen dem Einlass und dem Auslass und ist radial innerhalb einer zylindrischen Wandung des Gehäuses drehbar angeordnet. Mittels dieser Extruderschnecke 1 wird im Betrieb der Extrusionsvorrichtung gemäß einem Herstellverfahren ein Extrusionsbauteil / extrudiertes Bauteil gefertigt, wobei der zumindest eine Kunststoff in fester Form dem Einlass zugeführt, durch die Extruderschnecke 1 plastifiziert und am Auslass schließlich zur Ausbildung des Extrusionsbauteils ausgestoßen wird. Zur Plastifizierung durchtritt der zumindest eine Kunststoff die nachfolgend näher beschriebenen Zonen 2, 3 und 4 der Extruderschnecke 1.

In Fig. 1 ist zu erkennen, dass die drei Zonen 2, 3 und 4 in Form einer Aufschmelzzone 2, einer Mischzone 4 sowie einer Wellenzone 3 ausgebildet sind. Die Mischzone 4 schließt stromabwärts / in Extrusionsrichtung direkt / unmittelbar an die Aufschmelzzone 2 an. Die Wellenzone 3 schließt stromabwärts direkt / unmittelbar an die Mischzone 4 an. Die Aufschmelzzone 2 ist an einem ersten Schneckenabschnitt 11a der Extruderschnecke 1 ausgebildet; die Wellenzone 3 ist an einem zweiten Schneckenabschnitt 11b der Extruderschnecke 1 ausgebildet; die Mischzone 4 ist an einem dritten Schneckenabschnitt 11c der Extruderschnecke 1 ausgebildet. Die drei Schneckenabschnitte 11a, 11b, 11c schließen in axialer Richtung der Extruderschnecke 1 somit unmittelbar aneinander an / gehen unmittelbar ineinander über.

In weiteren Ausführungen kann auch zwischen der Aufschmelzzone 2 und der Mischzone 4 noch eine weitere Zone, etwa eine Metering-Zone, angeordnet sein. Auch zwischen der Mischzone 4 und der Wellenzone 3 kann prinzipiell eine weitere Zone angeordnet sein. Jeweils zwei unmittelbar aneinander entlang einer gedachten Schneckenlängsachse der Extruderschnecke 1 anschließende Zonen 2, 3, 4 unterscheiden sich insbesondere hinsichtlich der Ausbildung (Stegsteigung) bzw. dem Vorhandensein eines Fördersteges 5, 6.

Sowohl die Aufschmelzzone 2 als auch die Wellenzone 3 weisen jeweils zumindest einen Fördersteg 5, 6 auf. In der Aufschmelzzone 2 ist der Fördersteg als erster Fördersteg 5 bezeichnet. In der Wellenzone 3 ist der Fördersteg als zweiter Fördersteg 6 bezeichnet. Der jeweilige erste und zweite Fördersteg 5, 6 bildet einen Hauptfördersteg aus. Jeder der ersten und zweiten Förderstege 5, 6 erstreckt sich helixartig / helixförmig / schneckenförmig entlang der gedachten Schneckenlängsachse. Somit bilden der erste Fördersteg 5 und der zweite Fördersteg 6 jeweils ein Schneckengewinde an einer radialen Außenseite der Extruderschnecke 1 aus.

Die Aufschmelzzone 2 ist in einer weiteren Ausführung lediglich eingängig ausgebildet. In weiteren Ausführungen ist die Aufschmelzzone 2 mindestens zweigängig, nämlich dreigängig ausgebildet. In diesem ersten Ausführungsbeispiel ist sie jedoch zweigängig ausgebildet. Somit weist die Aufschmelzzone 2 neben dem ersten Fördersteg 5 einen Zwischenfördersteg 22 auf. Zur Veranschaulichung eines in der Aufschmelzzone 2 ausgebildeten (ersten) Förderganges 23 ist der erste Fördersteg 5 zweimal dargestellt. Der Zwischenfördersteg 22 erstreckt sich parallel zu dem sich helixförmig erstreckenden ersten Fördersteg 5, entlang der gedachten Schneckenlängsachse. Der Zwischenfördersteg 22 ist in axialer Richtung (entlang der gedachten Schneckenlängsachse) der Extruderschnecke 1 zwischen zwei Schnecken-/ Gewindegängen des ersten Fördersteges 5 angeordnet. Der durch den ersten Fördersteg 5 gebildete (erste) Fördergang 23 wird durch den Zwischenfördersteg 22 in zwei Teilfördergänge 24a und 24b unterteilt. Der erste Fördersteg 5 sowie der Zwischenfördersteg 22 weisen in radialer Richtung (in Bezug auf die Schneckenlängsachse) gesehen die gleiche Höhe auf.

In Fig. 1 ist die Aufschmelzzone 2 in Form einer Dekompressionszone ausgeführt. Die Gangtiefe (Tiefe des ersten Förderganges 23 / der ersten und zweiten 24a und 24b Teilfördergänge) der Aufschmelzzone 2 nimmt entlang der Schneckenlängsachse zu der Mischzone 4 hin / stromabwärts kontinuierlich / linear zu. Die Gangtiefe der Aufschmelzzone 2 kann daher entlang der Schneckenlängsachse zu der Mischzone 4 hin zumindest teilweise, abschnittsweise oder vollständig zunehmen. Hier ist es auch möglich, die Gangtiefe entlang der Schneckenlängsachse teilweise, abschnittsweise oder vollständig in der Aufschmelzzone 2 / Dekompressionszone gleich zu lassen.

Bei dem Ausführungsbeispiel nach Fig. 1 sei darauf hingewiesen, dass die Wellenzone 3 als eine übliche disperse Plastifizierungs- / Aufschmelzzone ausgebildet ist. Die Wellenzone 3 kann in einer weiteren Ausführung lediglich eingängig ausgebildet sein, in diesem Ausführungsbeispiel ist sie jedoch zweigängig ausgebildet. Die Wellenzone 3 ist ebenfalls mit einem (zweiten) Zwischenfördersteg 25 ausgestattet, der wiederum zwischen zwei axial aufeinander folgenden Gewindegängen des (zweiten) Fördersteges 6 der Wellenzone 3 angeordnet ist. Der zweite Zwischenfördersteg 25 erstreckt sich parallel zu dem sich helixförmig erstreckenden zweiten Fördersteg 6, entlang der gedachten Schneckenlängsachse. Der zweite Zwischenfördersteg 25 unterteilt einen durch den zweiten Fördersteg 6 gebildeten zweiten Fördergang 26 wiederum in einen ersten Teilfördergang 29a und einen zweiten Teilfördergang 29b. Die Wellenzone 3 ist als Wave-Zone ausgebildet und weist daher eine sich entlang des (zweiten) Förderganges 26 der Wellenzone 3 wellenförmig ändernde Gangtiefe auf.

Die radiale Höhe des zweiten Zwischenförderstegs 25 ist in einer weiteren Ausführung geringer als die radiale Höhe des zweiten Förderstegs 6, sodass ein Scherspalt am zweiten Zwischensteg entsteht. In einer weiteren Ausführung ändern der zweite Fördersteg 6 sowie der zweite Zwischenfördersteg 25 ihre radiale Höhe entlang des zweiten Förderganges 26 abschnittsweise, wobei der zweite Fördersteg 6 und der zweite Zwischenfördersteg 25 wechselweise ihre Funktion ändern und abschnittsweise als Fördersteg und als Schersteg dienen.

Axial (in Bezug auf die Schneckenlängsachse) zwischen der Aufschmelzzone 2 und der Wellenzone 3 ist die Mischzone 4 angeordnet. In dem Ausführungsbeispiel der Fig. 1 weist die Mischzone 4 keinen Fördersteg auf. Somit endet der erste Fördersteg 5 an einem der Mischzone 4 zugewandten Ende 7 der Aufschmelzzone 2. Auch der Zwischenfördersteg 22 endet an dem der Mischzone 4 zugewandten Ende 7 der Aufschmelzzone 2. Zudem beginnt der zweite Fördersteg 6 wiederum erst an einem der Mischzone 4 zugewandten Ende / Beginn 8 der Wellenzone 3. Auch der Zwischenfördersteg 25 beginnt erst an dem der Mischzone 4 zugewandten Ende 8 der Wellenzone 3. Somit ist in dieser Ausführung die Mischzone 4 stegfrei ausgeführt. Die Mischzone 4 weist daher keine länglichen Erhebungen / Stege auf, die sich helixförmig um zumindest einen Gewindegang / um mindestens 360° herum erstrecken.

In Fig. 1 ist weiterhin zu erkennen, dass in der Mischzone 4 mehrere hier lediglich schematisch angedeutete Mischabschnitte 9, 10 vorhanden sind, wobei diese Mischabschnitte 9, 10 prinzipiell, wie nachfolgend in Bezug auf die Fign. 2 und 3a bis 3h beschrieben, unterschiedlich ausgestaltet sein können.

Fig. 2 zeigt eine Mischzone 4 des ersten Ausführungsbeispiels, in der mehrere distributive Mischabschnitte 10 angeordnet sind. Diese distributiven Mischabschnitte 10 sind als separate Mischelemente ausgeführt und auf der Extruderschnecke 1 im Bereich der Mischzone 4 drehfest angebracht. Die (vier) distributiven Mischabschnitte 10 sind in axialer Richtung der Schneckenlängsachse beabstandet sowie nebeneinander angeordnet. Die distributiven Mischabschnitte 10 sind jeweils als eine Zahnscheibe 12 / Verzahnungsring ausgebildet. Die jeweilige Zahnscheibe 12 ist somit mit einem ringförmigen Grundkörper versehen, an dem mehrere (in einer Umfangsrichtung zueinander beabstandete) eine Außenverzahnung (Geradverzahnung) bildende Zähne 27 angebracht sind.

In Verbindung mit den Fign. 3a bis 3h ist erkennbar, dass diese Mischabschnitte 9, 10 jedoch auch prinzipiell unterschiedlich ausgeführt sein können. Die distributiven Mischabschnitte 10 können auch wie nachfolgend näher erläutert prinzipiell durch disperse Mischabschnitte 9 ersetzt werden oder zusätzlich zu diesen vorgesehen sein.

Im Vergleich zu Fig. 2, ist in Fig. 3a erkennbar, dass die distributiven Mischabschnitte 10 im Wesentlichen auch als eine unmittelbar / stoffeinteilig mit dem die Mischzone 4 ausbildenden (dritten) Schneckenabschnitt 11c der Extruderschnecke 1 ausgebildet sein können. Jeder Mischabschnitt 10 ist als eine Schrägverzahnung ausgebildet. Die Schrägverzahnung wird somit durch mehrere leistenförmige in Umfangsrichtung nebeneinander angeordnete integrale Erhebungen 15 an der Außenumfangsseite der Extruderschnecke 1 in der Mischzone 4 gebildet. Die jeweilige Erhebung 15 bildet wiederum einen Zahn 27 aus.

Während in Fig. 3a die gebildete Schrägverzahnung als Evolventenverzahnung ausgeführt ist, ist es gemäß Fig. 3b auch möglich, die Verzahnung nicht als Evolventenverzahnung auszuführen. Die distributiven Mischabschnitte 10 weisen jedoch wiederum parallel zueinander verlaufende Erhebungen 15 auf. Hinsichtlich der Erhebungen 15 sei darauf hingewiesen, dass diese sich um einen beschränkten Winkelbereich um die Außenumfangsseite der Extruderschnecke 1 herumerstrecken und jeweils keinen sich um 360° zu einem vollständigen Gewindegang erstreckenden Steg ausbilden.

In Zusammenhang mit Fig. 3c ist angedeutet, dass die distributiven Mischabschnitte 10 auch mehrere in Umfangsrichtung verteilte Mischstifte 13 aufweisen können. Die Mischstifte 13 sind in diesem Ausführungsbeispiel wiederum unmittelbar mit dem dritten Schneckenabschnitt 11c stoffeinteilig ausgeführt. Auch reicht es prinzipiell aus, den Mischabschnitt 10 mit nur einem Mischstift 13 auszustatten.

In Verbindung mit Fig. 3d ist der distributive Mischabschnitt 10 als eine Gruppe an in axialer Richtung sowie in Umfangsrichtung verteilter Rautenelemente 14 / rautenförmiger Erhebungen 15 ausgeführt. Auch die Rautenelemente 14 sind an der Außenumfangsseite der Extruderschnecke 1 stoffeinteilig ausgeformt.

In Verbindung mit den Fign. 3e bis 3h ist erkennbar, dass die distributiven Mischabschnitte 10 durch disperse Mischabschnitte 9 ersetzbar sind. In Fig. 3e ist der disperse Mischabschnitt 9 als ein Blisterringbereich / ein Blisterring 18 in der Mischzone 4 ausgebildet. Dieser Blisterringbereich 18 weist mehrere in Umfangsrichtung sowie in axialer Richtung der Extruderschnecke 1 verteilte kreisförmige Dellen / Ausnehmungen auf.

In den Fign. 3f und 3g sind weitere mögliche disperse Mischabschnitte 9 in Form von Scherspalten 16 veranschaulicht. In Fig. 3f sind mehrere Scherspalte 16 schräg verlaufend an der Außenumfangsseite der Extruderschnecke 1 angeordnet. In Fig. 3g ist eine mäanderförmiger Scherspalte 16 veranschaulicht.

In Fig. 3h ist der disperse Mischabschnitt 9 als ein ringförmiger Keilspaltbereich 17 / ein Keilspaltelement ausgeführt.

Die verschiedenen Mischabschnitte 9 und 10, wie in den Fign. 3a bis 3h veranschaulicht, sind prinzipiell aus der US 6 136 246 A bekannt, weshalb die hierin weiteren zu diesen Mischabschnitten genannten Ausführungen als hierin integriert gelten.

Statt dem Einsatz der Zahnscheibe 12, ist es prinzipiell auch möglich, den distributiven Mischabschnitt 10 als eine Lochscheibe / gelochte Scheibe auszubilden. Die Lochscheibe ist bevorzugt als mehreren in Umfangsrichtung verteilte sowie axial verlaufende Durchgangslöcher aufweisende Scheibe ausgeformt und an der Extruderschnecke 1, auf gleiche Art wie die Zahnscheiben 12, befestigt.

Prinzipiell sei auch darauf hingewiesen, dass in weiteren Ausführungsbeispielen die verschiedenen Mischabschnitte, d.h. die dispersen sowie distributiven Mischabschnitte 9, 10 frei miteinander kombiniert , sowohl als separate Elemente als auch als einstückiges / integrales Element, werden können.

Im Betrieb der erfindungsgemäßen Extrusionsvorrichtung wird das Feststoffbett vor dem Eintritt in die Wave-Zone (Wellenzone 3) auf eine möglichst kleine Partikelgröße zerkleinert, um die Aufschmelzleistung zu steigern. Zwischen dem aufschmelzenden Teil der Schnecke 1 in Form der Aufschmelzzone 2, die als Dekompressionszone ausgebildet ist, welche eine ein- oder mehrgängige Ausführung aufweisen kann, und der Wave-Zone 3 ist eine Mischzone 4 platziert, die eine möglichst stärkere Zer- und Verteilung des Feststoffbetts und eine möglichst gute Durchmischung zwischen Feststoff und Schmelze erreicht. Es werden bewusst distributive und/oder disperse Mischelemente (Mischabschnitte) 9, 10 eingesetzt. Distributive Mischelemente 10 können u.a. Zahnscheiben 12, Lochscheiben, Mischstifte 13 und/oder Rautenelemente 14 sein. Als disperse Mischelemente 9 eignen sich in diesem Fall Scherspalte 16a, 16b, Blisterringe 18 und/oder Keilspalteelemente 17. Durch die Verwendung distributiver und disperser Mischelemente 9, 10 wird eine deutlich intensivere Durchmischung in der Mischzone 4 erreicht sowie eine stärkere Ver- und Zerteilung des Feststoffbetts. Zudem unterstützt die Ausführung der Aufschmelzzone 2 als Dekompressionszone ein Unterspülen des Feststoffbetts und somit wiederum eine möglichst stärkere Zerund Verteilung des Feststoffbetts und eine möglichst gute Durchmischung zwischen Feststoff und Schmelze. Dadurch wird die Partikelgröße des Restfeststoffs, die in die Wave-Zone 3 übergeben wird, deutlich verkleinert, weshalb die Wave-Zone 3 effizienter plastifiziert und so auch eine höhere Plastifizierleistung erreicht wird. Neben den Mischelementen 9, 10 können bevorzugt in der Mischzone 4 jegliche Stege entfernt werden, um einen freien Fluss der Schmelze bzw. eine freie Vermischung aus Schmelze und des Feststoffs zu ermöglichen. Durch den freien Fluss wird die Wirksamkeit der Mischelemente 9, 10 weiter gesteigert, da Querströmungen, die eine zusätzliche Durchmischung und Umverteilung bewirken, entstehen.

### Bezugszeichenliste

- 1: Extruderschnecke
- 2: Aufschmelzzone
- 3: Wellenzone
- 4: Mischzone
- 5: erster Fördersteg
- 6: zweiter Fördersteg
- 7: Ende der Aufschmelzzone
- 8: Ende der Wellenzone
- 9: disperser Mischabschnitt
- 10: distributiver Mischabschnitt
- 11a: erster Schneckenabschnitt
- 11b: zweiter Schneckenabschnitt
- 11c: dritter Schneckenabschnitt
- 12: Zahnscheibe
- 13: Mischstift
- 14: Rautenelement
- 15: Erhebung
- 16a: erste Scherspalte
- 16b: zweite Scherspalte
- 17: Keilspaltbereich
- 18: Blisterringbereich
- 19: Barrieresteg
- 20: dritter Fördersteg
- 21: Durchbruch
- 22: Zwischenfördersteg / erster Zwischenfördersteg
- 23: erster Fördergang
- 24a: erster Teilfördergang
- 24b: zweiter Teilfördergang
- 25: zweiter Zwischenfördersteg
- 26: zweiter Fördergang
- 27: Zahn
- 28: Schneckenlängsachse
- 29a: erster Teilfördergang
- 29b: zweiter Teilfördergang

## Patentansprüche

1. Extruderschnecke (1) zum Plastifizieren von zumindest einem Kunststoff oder einem Kunststoffgemisch, mit einer Aufschmelzzone (2), einer zumindest einen seine Gangtiefe in Längsrichtung wellenförmig ändernden Fördergang aufweisenden Wellenzone (3) sowie einer zwischen der Aufschmelzzone (2) und der Wellenzone (3), in direktem Anschluss an die Aufschmelzzone (2), angeordneten Mischzone (4), wobei in der Aufschmelzzone (2) sowie in der Wellenzone (3) ein sich helixartig entlang einer Schneckenlängsachse erstreckender Fördersteg (5, 6) ausgebildet ist, wobei ein Fördersteg (5) der Aufschmelzzone (2) an einem der Mischzone (4) zugewandten Ende (7) der Aufschmelzzone (2) endet und ein Fördersteg (6) der Wellenzone (3) an einem der Mischzone (4) zugewandten Ende (8) beginnt und wobei eine Gangtiefe der Aufschmelzzone (2) entlang der Schneckenlängsachse zu der Mischzone (4) hin kontinuierlich zunimmt.

2. Extruderschnecke (1) nach Anspruch 1, **dadurch gekennzeichnet, dass** die Wellenzone (3) in direktem Anschluss an die Mischzone (4) angeordnet sind/ist.

3. Extruderschnecke (1) nach Anspruch 1 oder 2, **dadurch gekennzeichnet, dass** die Aufschmelzzone (2) mehrgängig ist.

4. Extruderschnecke (1) nach einem der Ansprüche 1 bis 3, **dadurch gekennzeichnet, dass** die Wellenzone (3) mehrgängig, vorzugsweise zweigängig, ist.

5. Extruderschnecke (1) nach einem der Ansprüche 1 bis 4, **dadurch gekennzeichnet, dass** die Aufschmelzzone (2) zumindest teilweise als eine Dekompressionszone ausgebildet ist.

6. Extruderschnecke (1) nach einem der Ansprüche 1 bis 5, **dadurch gekennzeichnet, dass** die Mischzone (4) zumindest einen eine distributive und/oder disperse Vermischung eines Feststoffanteils mit einem plastifizierten Anteil des zumindest einen Kunststoffes oder Kunststoffgemisches fördernden Mischabschnitt (9, 10) aufweist.

7. Extruderschnecke (1) nach Anspruch 6, **dadurch gekennzeichnet, dass** der zumindest eine Mischabschnitt (9, 10) stoffeinteilig mit einem die Mischzone (4) ausbildenden Schneckenabschnitt (11c) oder separat zu dem die Mischzone (4) ausbildenden Schneckenabschnitt (11c) ausgebildet ist

8. Extruderschnecke (1) nach Anspruch 6 oder 7, **dadurch gekennzeichnet, dass** der zumindest eine Mischabschnitt (10) als eine Zahnscheibe (12), eine Lochscheibe, ein Mischstift (13), oder ein Rautenelement (14) ausgebildet ist oder eine leistenförmige Erhebung (15) aufweist.

9. Extruderschnecke (1) nach Anspruch 6 oder 7, **dadurch gekennzeichnet, dass** der zumindest eine Mischabschnitt (9) als eine Scherspalte (16a, 16b), ein Blisterring (18) oder ein Keilspaltbereich (17) ausgebildet ist.

10. Extrusionsvorrichtung mit einer Extruderschnecke (1) nach einem der Ansprüche 1 bis 9.

11. Verfahren zum Plastifizieren zumindest eines Kunststoffs oder eines Kunststoffgemisches mittels der Extrusionsvorrichtung nach Anspruch 10.

## Claims

1. An extruder screw (1) for plasticizing at least one plastic or a plastic mixture, with a melting zone (2), a wave zone (3) having at least one conveying channel changing its channel depth in a wave-shaped manner in longitudinal direction, and a mixing zone (4) arranged between the melting zone (2) and the wave zone (3), in direct connection to the melting zone (2), wherein in the melting zone (2) and in the wave zone (3) a conveying flight (5, 6) is formed, extending helically along a longitudinal axis of the screw, wherein a conveying flight (5) of the melting zone (2) ends at an end (7) of the melting zone (2) facing the mixing zone (4), and a conveying flight (6) of the wave zone (3) begins at an end (8) facing the mixing zone (4), and wherein a channel depth of the melting zone (2) increases continuously along the longitudinal axis of the screw towards the mixing zone (4).

2. The extruder screw (1) according to Claim 1, **characterized in that** the wave zone (3) is/are arranged in direct connection to the mixing zone (4).

3. The extruder screw (1) according to Claim 1 or 2, **characterized in that** the melting zone (2) is multiple-threaded.

4. The extruder screw (1) according to one of Claims 1 to 3, **characterized in that** the wave zone (3) is multiple-threaded, preferably double-threaded.

5. The extruder screw (1) according to one of Claims 1 to 4, **characterized in that** the melting zone (2) is formed at least partially as a decompression zone.

6. The extruder screw (1) according to one of Claims 1 to 5, **characterized in that** the mixing zone (4) has at least one mixing section (9, 10) promoting a distributive and/or disperse mixing of a solid component with a plasticized component of the at least one plastic or plastic mixture.

7. The extruder screw (1) according to Claim 6, **characterized in that** the at least one mixing section (9, 10) is formed materially in one piece with a screw section (11c) forming the mixing zone (4), or separately to the screw section (11c) forming the mixing zone (4).

8. The extruder screw (1) according to Claim 6 or 7, **characterized in that** the at least one mixing section (10) is formed as a toothed disk (12), a perforated disk, a mixing pin (13), or a rhombic element (14), or has a strip-shaped elevation (15).

9. The extruder screw (1) according to Claim 6 or 7, **characterized in that** the at least one mixing section (9) is formed as a shear gap (16a, 16b), a blister ring (18) or a wedge gap region (17).

10. An extrusion device with an extruder screw (1) according to one of Claims 1 to 9.

11. A method for plasticizing at least one plastic or a plastic mixture by means of the extrusion device according to Claim 10.

## Revendications

1. Vis d'extrudeuse (1) pour plastifier au moins une matière plastique ou un mélange de matières plastiques, comprenant une partie de fusion (2), une partie ondulée (3) présentant au moins un pas d'avancement modifiant en ondulations sa profondeur de pas dans le sens longitudinal ainsi qu'une partie de mélange (4) disposée entre la partie de fusion (2) et la partie ondulée (3) raccordée directement à la partie de fusion (2), dans laquelle une barre d'avancement (5, 6) s'étendant en hélice le long d'un axe longitudinal de vis sans fin est formée dans la partie de fusion (2) ainsi que dans la partie ondulée (3), dans laquelle une barre d'avancement (5) de la partie de fusion (2) termine contre une extrémité (7) de la partie de fusion (2) tournée vers la partie de mélange (4) et une barre d'avancement (6) de la partie ondulée (3) commence contre une extrémité (8) tournée vers la partie de mélange (4), et dans laquelle une profondeur de pas de la partie de fusion (2) croît continuellement en direction de la partie de mélange (4) le long de l'axe longitudinal de vis sans fin.

2. Vis d'extrudeuse (1) selon la revendication 1, **caractérisée en ce que** la partie ondulée (3) est disposée en étant raccordée directement à la partie de mélange (4).

3. Vis d'extrudeuse (1) selon la revendication 1 ou 2, **caractérisée en ce que** la partie de mélange (2) est à pas multiples.

4. Vis d'extrudeuse (1) selon l'une des revendications 1 à 3, **caractérisée en ce que** la partie ondulée (3) est à pas multiples, de préférence à deux pas.

5. Vis d'extrudeuse (1) selon l'une des revendications 1 à 4, **caractérisée en ce que** la partie de fusion (2) est formée au moins partiellement en tant qu'une partie de décompression.

6. Vis d'extrudeuse (1) selon l'une des revendications 1 à 5, **caractérisée en ce que** la partie de mélange (4) présente au moins un tronçon de mélange (9, 10) faisant avancer un mélange distributif et/ou dispersé d'une part de substance solide avec une part plastifiée de l'au moins une matière plastique ou mélange de matières plastiques.

7. Vis d'extrudeuse (1) selon la revendication 6, **caractérisée en ce que** l'au moins un tronçon de mélange (9, 10) est conçu d'une seule pièce avec un tronçon de vis sans fin (11c) formant la partie de mélange (4) ou séparément au tronçon de vis sans fin (11c) formant la partie de mélange (4).

8. Vis d'extrudeuse (1) selon la revendication 6 ou 7, **caractérisée en ce que** l'au moins un tronçon de mélange (10) est formé en tant qu'un disque denté (12), un disque à trous, une broche de mélange (13) ou un élément en losange (14) ou présente un bossage (15) en forme de barrette.

9. Vis d'extrudeuse (1) selon la revendication 6 ou 7, **caractérisée en ce que** l'au moins un tronçon de mélange (9) est conçu en tant qu'une fente de cisaillement (16a, 16b), une anneau cloquant (18) ou une partie de fente cunéiforme (17).

10. Dispositif d'extrusion comprenant une vis d'extrusion (1) selon l'une des revendications 1 à 9.

11. Procédé destiné à la plastification d'au moins une matière plastique ou d'un mélange de matières plastiques au moyen d'un dispositif d'extrusion selon la revendication 10.
